# EUROPEAN PATENT APPLICATION

(11) **EP 3 493 314 A1**
(43) Date of publication of application: **05.06.2019**
(21) Application number: 17833798.6
(22) Date of filing: 17.05.2017
(51) Int. Cl.: H01M 8/18, H01M 8/02

(54) **RECHARGEABLE BATTERY SYSTEM, AND ELECTROLYTE**

(30) Priority: 26.07.2016 JP 2016146799
(71) Applicant: Sumitomo Electric Industries, Ltd., Osaka-shi, Osaka 541-0041 (JP)
(72) Inventor: MORIUCHI, Kiyoaki, Osaka-shi Osaka 554-0024 (JP); SEKINE, Ryojun, Osaka-shi Osaka 554-0024 (JP); SUGIHARA, Takayasu, Osaka-shi Osaka 554-0024 (JP)
(74) Representative: Boult Wade Tennant LLP
(86) International application number: PCT/JP2017/018549
(87) International publication number: WO 2018/020787

(57) **Abstract**

Provided is an electrolyte flow battery system including a gas supply mechanism that always continuously supplies a flow gas containing an inert gas to a gas phase in a tank that stores an electrolyte. In the electrolyte, the total concentration of ions of elements in groups 1 to 8 and 13 to 16 in the fifth period and groups 1, 2, 4 to 8, and 13 to 15 in the sixth period of a periodic table is 2,500 mg/L or less. The concentration of vanadium ions is 1 mol/L or more and 3 mol/L or less. The concentration of free sulfuric acid is 1 mol/L or more and 4 mol/L or less. The concentration of phosphoric acid is 1.0 × 10⁻⁴ mol/L or more and 7.1 × 10⁻¹ mol/L or less. The concentration of ammonium is 20 mg/L or less. The concentration of silicon is 40 mg/L or less. The generation rate of hydrogen is less than 95 cc/h/m² when a charge and discharge test is performed while the electrolyte is circulated and supplied to an electrolyte flow battery. The flow rate of the flow gas is 1.0 L/min or more and 50 L/min or less.

## Description

### Technical Field

The present invention relates to an electrolyte flow battery and an electrolyte.

The present application claims priority to Japanese Patent Application No. 2016-146799 filed in the Japan Patent Office on July 26, 2016, the entire contents of which is incorporated herein by reference.

### Background Art

In some secondary battery (electrolyte flow battery) systems, battery reactions are performed with electrolytes. For example, an aqueous sulfuric acid solution containing ions whose valence varies with reduction or oxidation and which serve as an active material is used as an electrolyte of an electrolyte flow battery system (see paragraph 0023 of the specification of Patent Literature 1, 2, and 3). Patent Literatures 1 to 3 each disclose a vanadium-based electrolyte containing vanadium ions serving as an active material for positive and negative electrodes.

### Citation List

### Patent Literature

PTL 1: Japanese Unexamined Patent Application Publication No. 2002-367657
PTL2: Japanese Unexamined Patent Application Publication No. 2007-311209
PTL 3: Japanese Unexamined Patent Application Publication No. 2015-232960

### Summary of Invention

An electrolyte flow battery system according to the present disclosure includes:
an electrolyte flow battery and an electrolyte supplied to the electrolyte flow battery, the electrolyte flow battery system including:
a gas supply mechanism that always continuously supplies a flow gas containing an inert gas to a gas phase in a tank that stores the electrolyte,
in which the gas supply mechanism includes:
a gas supply source of the flow gas;
a flow gas channel including an introduction pipe through which the flow gas is introduced into the gas phase in the tank and a discharge pipe through which a gas is discharged from the gas phase in the tank; and
a gas-flow control mechanism that controls a flow rate of the flow gas from the gas supply source,
in which in the electrolyte,
the total concentration of ions of the elements in groups 1 to 8 and 13 to 16 in the fifth period and groups 1, 2, 4 to 8, and 13 to 15 in the sixth period of the periodic table is 2,500 mg/L or less, the ions serving as impurity element ions associated with the generation of a gas containing a hydrogen element,
the concentration of vanadium ions is 1 mol/L or more and 3 mol/L or less,
the concentration of free sulfuric acid is 1 mol/L or more and 4 mol/L or less,
the concentration of phosphoric acid is 1.0 × 10⁻⁴ mol/L or more and 7.1 × 10⁻¹ mol/L or less,
the concentration of ammonium is 20 mg/L or less,
the concentration of silicon is 40 mg/L or less, and
the generation rate of hydrogen at a negative electrode of the electrolyte flow battery during charge and discharge is less than 95 cc/h/m² when a charge and discharge test is performed under conditions described below while the electrolyte is circulated and supplied to the electrolyte flow battery without supplying the flow gas, and
in which the flow rate of the flow gas is 1.0 L/min or more and 50 L/min or less, (charge and discharge conditions):
   charge and discharge method: continuous charge and discharge at a constant current;
   current density: 70 (mA/cm²);
   end-of-charge voltage: 1.55 (V)/cell;
   end-of-discharge voltage: 1.00 (V)/cell; and
   temperature: room temperature (25°C).

An electrolyte according to the present disclosure is:
an electrolyte supplied to an electrolyte flow battery,
in which the total concentration of ions of the elements in groups 1 to 8 and 13 to 16 in the fifth period and groups 1, 2, 4 to 8, and 13 to 15 in the sixth period of the periodic table is 2,500 mg/L or less, the ions serving as impurity element ions the associated with the generation of a gas containing a hydrogen element,
the concentration of vanadium ions is 1 mol/L or more and 3 mol/L or less,
the concentration of free sulfuric acid is 1 mol/L or more and 4 mol/L or less,
the concentration of phosphoric acid is 1.0 × 10⁻⁴ mol/L or more and 7.1 × 10⁻¹ mol/L or less,
the concentration of ammonium is 20 mg/L or less,
the concentration of silicon is 40 mg/L or less, and
the generation rate of hydrogen at a negative electrode of the electrolyte flow battery during charge and discharge is less than 95 cc/h/m² when a charge and discharge test is performed under conditions described below while the electrolyte is circulated and supplied to the electrolyte flow battery,
(charge and discharge conditions):
charge and discharge method: continuous charge and discharge at a constant current;
current density: 70 (mA/cm²);
end-of-charge voltage: 1.55 (V)/cell;
end-of-discharge voltage: 1.00 (V)/cell; and
temperature: room temperature (25°C).

### Brief Description of Drawings

Figure 1 is an explanatory view illustrating a schematic structure of an electrolyte flow battery system according to an embodiment and the operating principle of an electrolyte flow battery.
Figure 2 is a schematic diagram illustrating a gas supply mechanism included in the electrolyte flow battery system according to an embodiment. Description of Embodiments

### [Problem to be Solved by Disclosure]

In electrolyte flow battery systems, gas generation attributed to, for example, a side reaction accompanying battery reactions can occur. For example, in the case where an electrolyte is the aqueous sulfuric acid solution described above, hydrogen and so forth can be generated at a negative electrode (paragraph 0011 of the specification of Patent Literature 2). Patent Literature 2 discloses that a gas accumulated in a tank that stores an electrolyte is cleaned and removed with a gas removal device. By this removal, the removed gas can be discharged to the outside (the atmosphere). To confirm that the removal of the gas is sufficiently performed in consideration of safety, the gas removal device requires frequent maintenance. As a technique to solve this problem, Patent Literature 3 discloses that a flow gas containing an inert gas is supplied to gas phases in positive and negative electrolyte tanks to reduce the concentration of hydrogen in the gas phases, and then low-concentration hydrogen is discharged to the atmosphere. However, even if the flow gas is always continuously supplied to the gas phases in the tanks, the gas phases cannot be sufficiently purged, in some cases, depending on the type of electrolyte and supply conditions of the flow gas.

Accordingly, it is an object to provide an electrolyte flow battery system that can sufficiently purge a gas phase in a tank that stores an electrolyte.

Furthermore, it is an object to provide an electrolyte that can be used in the electrolyte flow battery system.

### [Advantageous Effects of Disclosure]

The electrolyte flow battery system of the present disclosure can sufficiently purge the gas phase in the tank that stores the electrolyte.

The electrolyte of the present disclosure can be used in the electrolyte flow battery system of the present disclosure.

### [Description of Embodiments of Invention]

The inventors have conducted intensive studies on the reason why the gas phase cannot be sufficiently purged even if the flow gas is always continuously supplied to a gas phase in a tank and have found that the amount of gas generated is large. The inventors have focused attention on, in particular, an electrolyte used for an electrolyte flow battery in order to find the cause of gas generation due to, for example, a side reaction accompanying battery reactions. The electrolyte may contain impurity ions such as impurity element ions and impurity compound ions in addition to active material ions. The impurity ions in the electrolyte originate mainly from various materials such as raw materials of the electrolyte, materials and members used in the manufacturing process of the electrolyte, and members used to transport and store the electrolyte. Furthermore, the impurity ions may originate from constituent members of the electrolyte flow battery system with which the electrolyte can come into contact during operation of the electrolyte flow battery system. The results of studies on the type and amount of such impurity ions and the amount of gas generated revealed that the generation of a gas containing a hydrogen element (hereinafter, also referred to as a "H-containing gas") can be attributed to an excessive amount of specific impurity element ion species that can be contained in the electrolyte. In the case where an electrolyte with a H-containing gas generation rate in a specific range is used, it was found that the gas phase in the tank can be effectively purged by setting the flow rate of the flow gas always continuously supplied to the gas phase in the tank to a specific range. The present invention is based on these findings. Embodiments of the present invention are listed and explained below.
(1) An electrolyte flow battery system according to an embodiment of the present invention includes:
   an electrolyte flow battery and an electrolyte supplied to the electrolyte flow battery, the electrolyte flow battery system including:
   a gas supply mechanism that always continuously supplies a flow gas containing an inert gas to a gas phase in a tank that stores the electrolyte,
   in which the gas supply mechanism includes:
      a gas supply source of the flow gas;
      a flow gas channel including an introduction pipe through which the flow gas is introduced into the gas phase in the tank and a discharge pipe through which a gas is discharged from the gas phase in the tank; and
      a gas-flow control mechanism that controls a flow rate of the flow gas from the gas supply source,
      in which in the electrolyte,
      the total concentration of ions of the elements in groups 1 to 8 and 13 to 16 in the fifth period and groups 1, 2, 4 to 8, and 13 to 15 in the sixth period of the periodic table is 2,500 mg/L or less, the ions serving as impurity element ions associated with the generation of a gas containing a hydrogen element,
      the concentration of vanadium ions is 1 mol/L or more and 3 mol/L or less,
      the concentration of free sulfuric acid is 1 mol/L or more and 4 mol/L or less,
      the concentration of phosphoric acid is 1.0 × 10⁻⁴ mol/L or more and 7.1 × 10⁻¹ mol/L or less,
      the concentration of ammonium is 20 mg/L or less,
      the concentration of silicon is 40 mg/L or less, and
      the generation rate of hydrogen at a negative electrode of the electrolyte flow battery during charge and discharge is less than 95 cc/h/m² when a charge and discharge test is performed under conditions described below while the electrolyte is circulated and supplied to the electrolyte flow battery without supplying the flow gas, and
      in which the flow rate of the flow gas is 1.0 L/min or more and 50 L/min or less, (charge and discharge conditions):
         charge and discharge method: continuous charge and discharge at a constant current;
         current density: 70 (mA/cm²);
         end-of-charge voltage: 1.55 (V)/cell;
         end-of-discharge voltage: 1.00 (V)/cell; and
         temperature: room temperature (25°C).

Although the electrolyte can contain both specific element ions of the fifth period and specific element ions of the sixth period, the total content thereof is very low. This can reduce the generation of a gas due to, for example, the side reaction accompanying the battery reactions, in particular, the generation of a gas containing hydrogen (H-containing gas) at a negative electrode. Specifically, the generation rate of hydrogen at the negative electrode can be reduced to 95 cc/h/m² or less under the charge and discharge conditions described above. Thus, the gas phase in the tank can be sufficiently purged by setting the flow rate of the flow gas that is always continuously supplied to the gas phase in the tank with the gas supply mechanism at 1.0 L/min or more and 50 L/min or less. Accordingly, the electrolyte flow battery system can reduce the concentration of hydrogen in the gas phase in the tank and release low-concentration hydrogen from the tank to the atmosphere.

At a flow rate of the flow gas of 1.0 L/min or more, the gas phase in the tank can be sufficiently purged as described above because of its high flow rate. At a flow rate of the flow gas of 50 L/min or less, the flow rate is not excessively high. This can inhibit an increase in the pressure in the tank to an excessive positive pressure (higher pressure than atmospheric pressure). In addition, increases in the size of the gas supply source and the tank can be suppressed to suppress an increase in the size of the electrolyte flow battery system.

The electrolyte is a vanadium-based electrolyte that contains vanadium ions serving as an active material and that mainly contains a solution containing sulfuric acid and phosphoric acid. The electrolyte has a specific composition and thus various advantageous effects such as 1. the easy reduction of gas generation due to the side reaction accompanying the battery reactions; 2. a good balance between positive and negative electrodes in terms of valence, and good battery characteristics such as battery efficiency; 3. the inhibition of the precipitation of an active material element-containing compound such as an ammonium-vanadium compound; and 4. the inhibition of gelation of the electrolyte attributed to silicon. Thus, the electrolyte flow battery system can further reduce the gas generation due to, for example, the side reaction accompanying the battery reactions, can inhibit the precipitation of an active material element-containing precipitate originating from active material element ions, and thus has good battery characteristics.
(2) In the electrolyte flow battery system according to an embodiment, the electrolyte may have a concentration of barium ions of 70 mg/L or less, the barium ions serving as impurity element ions associated with the generation of a gas containing a hydrogen element.
   Even if the electrolyte contains barium ions, which are ions of the element in group 2 in the sixth period of the periodic table, the barium ion content is very low. This can reduce the generation of a gas, in particular, the generation of the H-containing gas at the negative electrode. Thus, the gas phase in the tank can be sufficiently purged. Thereby, the concentration of hydrogen in the gas phase in the tank is reduced, and low-concentration hydrogen can be released from the tank to the atmosphere.
(3) In the electrolyte flow battery system according to an embodiment, the electrolyte may have a concentration of molybdenum ions of 2,100 mg/L or less, the molybdenum ions serving as impurity element ions associated with the generation of a gas containing a hydrogen element.
   Even if the electrolyte contains molybdenum ions, which are ions of the element in group 6 in the fifth period of the periodic table, the molybdenum ion content is very low. This can reduce the generation of a gas, in particular, the generation of the H-containing gas at the negative electrode. Thus, the gas phase in the tank can be sufficiently purged. Thereby, the concentration of hydrogen in the gas phase in the tank is reduced, and low-concentration hydrogen can be released from the tank to the atmosphere.
(4) In the electrolyte flow battery system according to an embodiment, the electrolyte may have a concentration of tungsten ions of 310 mg/L or less, the tungsten ions serving as impurity element ions associated with the generation of a gas containing a hydrogen element.
   Even if the electrolyte contains tungsten ions, which are ions of the element in group 6 in the sixth period of the periodic table, the tungsten ion content is very low. This can reduce the generation of a gas, in particular, the generation of the H-containing gas at the negative electrode. Thus, the gas phase in the tank can be sufficiently purged. Thereby, the concentration of hydrogen in the gas phase in the tank is reduced, and low-concentration hydrogen can be released from the tank to the atmosphere.
(5) In the electrolyte flow battery system according to an embodiment, the electrolyte may have a concentration of rhenium ions of 50 mg/L or less, the rhenium ions serving as impurity element ions associated with the generation of a gas containing a hydrogen element.
   Even if the electrolyte contains rhenium ions, which are ions of the element in group 7 in the sixth period of the periodic table, the rhenium ion content is very low. This can reduce the generation of a gas, in particular, the generation of the H-containing gas at the negative electrode. Thus, the gas phase in the tank can be sufficiently purged. Thereby, the concentration of hydrogen in the gas phase in the tank is reduced, and low-concentration hydrogen can be released from the tank to the atmosphere.
(6) In the electrolyte flow battery system according to an embodiment, the electrolyte may have a concentration of indium ions of 25 mg/L or less, the indium ions serving as impurity element ions associated with the generation of a gas containing a hydrogen element.
   Even if the electrolyte contains indium ions, which are ions of the element in group 13 in the fifth period of the periodic table, the indium ion content is very low. This can reduce the generation of a gas, in particular, the generation of the H-containing gas at the negative electrode. Thus, the gas phase in the tank can be sufficiently purged. Thereby, the concentration of hydrogen in the gas phase in the tank is reduced, and low-concentration hydrogen can be released from the tank to the atmosphere.
(7) In the electrolyte flow battery system according to an embodiment, the electrolyte may have a concentration of antimony ions of 50 mg/L or less, the antimony ions serving as impurity element ions associated with the generation of a gas containing a hydrogen element.
   Even if the electrolyte contains antimony ions, which are ions of the element in group 15 in the fifth period of the periodic table, the antimony ion content is very low. This can reduce the generation of a gas, in particular, the generation of the H-containing gas at the negative electrode. Thus, the gas phase in the tank can be sufficiently purged. Thereby, the concentration of hydrogen in the gas phase in the tank is reduced, and low-concentration hydrogen can be released from the tank to the atmosphere.
(8) In the electrolyte flow battery system according to an embodiment, the electrolyte may have a concentration of bismuth ions of 110 mg/L or less, the bismuth ions serving as impurity element ions associated with the generation of a gas containing a hydrogen element.
   Even if the electrolyte contains bismuth ions, which are ions of the element in group 15 in the sixth period of the periodic table, the bismuth ion content is very low. This can reduce the generation of a gas, in particular, the generation of the H-containing gas at the negative electrode. Thus, the gas phase in the tank can be sufficiently purged. Thereby, the concentration of hydrogen in the gas phase in the tank is reduced, and low-concentration hydrogen can be released from the tank to the atmosphere.
(9) An electrolyte according to an embodiment of the present invention is:
   an electrolyte supplied to an electrolyte flow battery,
   in which the total concentration of ions of the elements in groups 1 to 8 and 13 to 16 in the fifth period and groups 1, 2, 4 to 8, and 13 to 15 in the sixth period of the periodic table is 2,500 mg/L or less, the ions serving as impurity element ions the associated with the generation of a gas containing a hydrogen element,
   the concentration of vanadium ions is 1 mol/L or more and 3 mol/L or less,
   the concentration of free sulfuric acid is 1 mol/L or more and 4 mol/L or less,
   the concentration of phosphoric acid is 1.0 × 10⁻⁴ mol/L or more and 7.1 × 10⁻¹ mol/L or less,
   the concentration of ammonium is 20 mg/L or less,
   the concentration of silicon is 40 mg/L or less, and
   the generation rate of hydrogen at a negative electrode of the electrolyte flow battery during charge and discharge is less than 95 cc/h/m² when a charge and discharge test is performed under conditions described below while the electrolyte is circulated and supplied to the electrolyte flow battery,
   (charge and discharge conditions):
   charge and discharge method: continuous charge and discharge at a constant current;
   current density: 70 (mA/cm²);
   end-of-charge voltage: 1.55 (V)/cell;
   end-of-discharge voltage: 1.00 (V)/cell; and
   temperature: room temperature (25°C).

The electrolyte can reduce gas generation. The use of the electrolyte as an electrolyte for an electrolyte flow battery system can reduce gas generation, in particular, the generation of the H-containing gas at the negative electrode. Thus, the electrolyte can contribute to the building of the electrolyte flow battery system that can sufficiently purge the gas phase in the tank for the electrolyte.

### [Details of Embodiments of Invention]

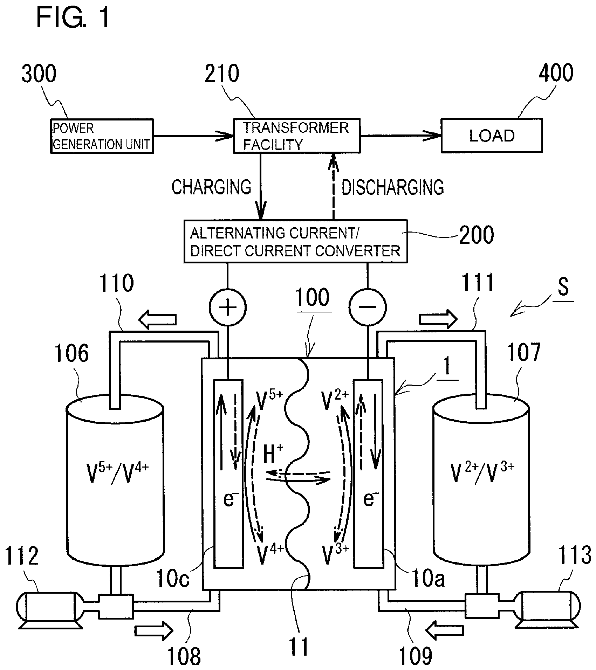

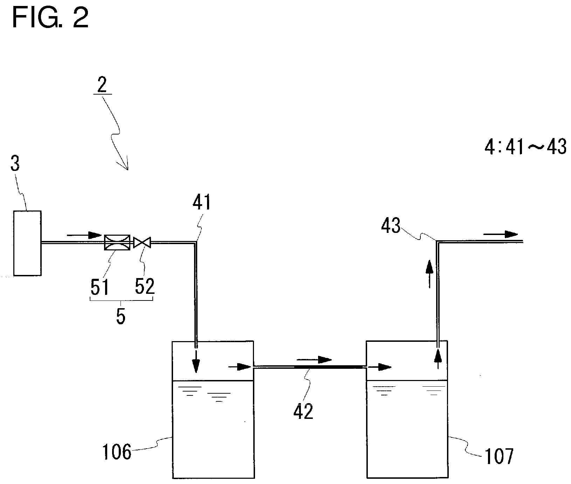

An electrolyte flow battery system S according to an embodiment of the present invention will be described in more detail below with reference to Figures 1 and 2. Ions indicated in a positive electrolyte tank 106 and a negative electrolyte tank 107 in Figure 1 are examples of ionic species serving as an active material contained in an electrolyte. In an electrolyte flow battery 1, solid arrows indicate charging, and dashed arrows indicate discharging. For the purpose of illustration, in Figure 1, the electrolyte flow battery 1 and a circulation mechanism in the electrolyte flow battery system S are illustrated, and a gas supply mechanism is omitted. In Figure 2, a gas supply mechanism 2 and the tanks 106 and 107 of the circulation mechanism are illustrated, and the remainder thereof are omitted. In Figure 2, black arrows indicate the flow of a flow gas.

### (Outline of Electrolyte Flow Battery System)

The electrolyte flow battery system S according to an embodiment includes the electrolyte flow battery 1, the electrolyte, and the circulation mechanism (described below) to supply the electrolyte to the electrolyte flow battery 1. Typically, the electrolyte flow battery 1 is connected to a power generation unit 300 and a load 400 such as a power system or a consumer through, for example, an alternating current/direct current converter 200 and a transformer facility 210. Charging is performed with the power generation unit 300 serving as a power source. Discharging is performed with the load 400 serving as a power supply target. Examples of the power generation unit 300 include solar photovoltaic power generators, wind power generators, and other general power plants.

### (Basic Structure of Electrolyte Flow Battery)

The electrolyte flow battery 1 mainly includes a battery cell 100 including a positive electrode 10c, a negative electrode 10a, and a membrane 11 interposed between both electrodes 10c and 10a.

Typically, the electrolyte flow battery 1 is used in the form of a cell stack, the cell stack including stacked battery cells 100. The cell stack has a typical structure that includes frame assemblies each including a bipolar plate (not illustrated) and a frame body (not illustrated) disposed on the outer periphery of the bipolar plate, the bipolar plate including the positive electrode 10c disposed on one surface thereof and the negative electrode 10a disposed on the other surface thereof. In the bipolar plate, a channel such as a groove through which an electrolyte flows may be disposed. The frame body has liquid supply holes that supply an electrolyte to the respective electrodes on the bipolar plate and liquid drainage holes that drain the electrolyte. By stacking the frame assemblies, the liquid supply holes and the liquid drainage holes are formed into flow paths for the electrolytes. The flow paths are connected to pipes 108 to 111. The cell stack has a structure in which the bipolar plate, the positive electrode 10c, the membrane 11, and the negative electrode 10a of a frame assembly, the bipolar plate, ..., of another frame assembly, and so on are repeatedly stacked in this order.

### (Circulation Mechanism)

The circulation mechanism includes the positive electrolyte tank 106 to store a positive electrolyte that is circulated and supplied to the positive electrode 10c, a negative electrolyte tank 107 to stores a negative electrolyte that is circulated and supplied to the negative electrode 10a, the pipes 108 and 110 that connect the positive electrolyte tank 106 to the electrolyte flow battery 1, the pipes 109 and 111 that connect the negative electrolyte tank 107 to the electrolyte flow battery 1, and pumps 112 and 113 disposed on the pipes 108 and 109 on the upstream side (supply side).

The electrolyte flow battery system S circulates and supplies the positive electrolyte to the positive electrode 10c using a positive electrolyte circulation path provided with the positive electrolyte tank 106 and the pipes 108 and 110, and circulates and supplies the negative electrolyte to the negative electrode 10a using a negative electrolyte circulation path provided with the negative electrolyte tank 107 and the pipes 109 and 111. The circulation and the supply bring about valence-change reactions of active material ions in each of the positive and negative electrolytes, thereby performing charge and discharge. As the basic structure of the electrolyte flow battery system S, a known structure can be appropriately used. One of the characteristics of the electrolyte flow battery system S according to an embodiment is that the system S includes a gas supply mechanism 2 that supplies a flow gas containing an inert gas to a gas phase in the negative electrolyte tank 107 and an electrolyte according to any one of first to ninth embodiments. The gas supply mechanism 2 will be described below, and then the electrolytes according to the first to ninth embodiments will be described sequentially.

### (Gas Supply Mechanism)

The gas supply mechanism 2 always continuously supplies the flow gas containing an inert gas to a gas phase in the negative electrolyte tank 107. Thereby, the gas phase in the negative electrolyte tank 107 is sufficiently purged. In the electrolyte flow battery system S, the use of the electrolyte according to each of the following embodiments can generate a gas containing a hydrogen element (H-containing gas) at the negative electrode because of a side reaction accompanying battery reactions. Thereby, the H-containing gas is easily accumulated in the gas phase in the negative electrolyte tank 107. The concentration of hydrogen in the gas phase in the negative electrolyte tank 107 is reduced by sufficiently purging the gas phase in the negative electrolyte tank 107. Thus, low-concentration hydrogen can be released from the negative electrolyte tank 107 to the atmosphere.

The term "always" indicates the period of time during which the electrolyte flow battery system S is in operation. The term "always" includes the period of time during which the electrolyte flow battery 1 included in the electrolyte flow battery system S is in operation, i.e., the period of time during which charge or discharge is performed by circulating the electrolytes through the electrolyte flow battery 1, and the period of time during which the electrolyte flow battery 1 is not operated in preparation for charge or discharge, i.e., the period of time during which the electrolytes are not circulated through the electrolyte flow battery 1. The phrase "other than always" indicates, for example, the period of time during which the maintenance of the electrolyte flow battery system S including the electrolyte flow battery 1 is performed.

The gas supply mechanism 2 includes a gas supply source 3, a flow gas channel 4, and a gas-flow control mechanism 5.

### • Gas Supply Source

The gas supply source 3 stores or generates the flow gas containing an inert gas and supplies the flow gas to the electrolyte flow battery 1. Examples of the inert gas include nitrogen and noble gases (argon, neon, and helium). Nitrogen is easily available and inexpensive. The percentage of the inert gas in the flow gas is preferably 99.9% or more by volume. The use of a higher percentage can further inhibit the degradation of the electrolyte due to the flow gas. In particular, when the percentage of the inert gas in the flow gas is 99.9% or more by volume, in theory, the degradation of the electrolyte will be inhibited for over 10 years.

The gas supply source 3 may include, for example, a storage member (e.g., a cylinder or tank) that stores the inert gas or a gas generator that generates the inert gas. The former configuration can be easily provided. The latter configuration can reduce labor required to refill the inert gas. In particular, in the case of a gas generator that generates nitrogen, because nitrogen can be extracted from the atmosphere, the flow gas can be semi-permanently supplied.

### • Flow Gas Channel

The flow gas channel 4 is a flow channel through which the flow gas is always continuously supplied to the gas phase in the negative electrolyte tank 107. In this embodiment, the flow gas is continuously supplied also to the gas phase in the positive electrolyte tank 106 through the flow gas channel 4. The flow gas channel 4 includes a positive electrode introduction pipe 41, a negative electrode introduction pipe 42, and a negative electrode discharge pipe 43. These pipes 41 to 43 are preferably provided with valves (not illustrated) used for maintenance and so forth.

The positive electrode introduction pipe 41 is a pipe that introduces the flow gas supplied from the gas supply source 3 into the positive electrolyte tank 106. The positive electrode introduction pipe 41 is open to the gas phase in the positive electrolyte tank 106. The positive electrode introduction pipe 41 is provided with the gas-flow control mechanism 5 as described below. The negative electrode introduction pipe 42 is a pipe that introduces the flow gas into the gas phase in the negative electrolyte tank 107. In this embodiment, the negative electrode introduction pipe 42 is formed of a gas-phase-communicating pipe that allows the gas phase in the positive electrolyte tank 106 to communicate with the gas phase in the negative electrolyte tank 107. That is, the flow gas introduced into the gas phase in the positive electrolyte tank 106 through the positive electrode introduction pipe 41 is introduced into the gas phase in the negative electrolyte tank 107 through the negative electrode introduction pipe (gas-phase-communicating pipe) 42. The negative electrode introduction pipe 42 also serves as a positive electrode discharge pipe that discharges a gas from the gas phase in the positive electrolyte tank 106 because of its structure. The negative electrode discharge pipe 43 is a pipe that discharges a gas from the gas phase in the negative electrolyte tank 107. These pipes 41 to 43 serve as a flow gas channel extending from the gas supply source 3 to the atmosphere through the gas phase in the positive electrolyte tank 106 and the gas phase in the negative electrolyte tank 107.

In addition to the negative electrode introduction pipe (gas-phase-communicating pipe) 42, the flow gas channel 4 may include a positive electrode discharge pipe (not illustrated) that discharges a gas from the gas phase in the positive electrolyte tank 106. In this case, a discharge manifold (not illustrated) used to collectively release a gas discharged from the positive electrode discharge pipe and a gas discharged from the negative electrode discharge pipe 43 to the atmosphere may be provided.

### • Gas-Flow Control Mechanism

The gas-flow control mechanism 5 controls the flow rate of the flow gas supplied from the gas supply source 3 to the electrolyte flow battery 1. In this embodiment, the flow rate of the flow gas supplied from the gas supply source 3 to the electrolyte flow battery 1 is controlled to a predetermined value or more. Thereby, the flow gas can be always continuously supplied from the gas supply source 3 to the gas phase in the positive electrolyte tank 106 and the gas phase in the negative electrolyte tank 107. The gas-flow control mechanism 5 includes, for example, a flowmeter 51 and a valve 52. The gas-flow control mechanism 5 controls the degree of opening of the valve 52 on the basis of the flow rate of the flow gas in the positive electrode introduction pipe 41, the flow rate being measured with the flowmeter 51. The determination of the degree of opening based on the flow rate and the operation of the valve 52 are performed by a control unit such as a computer (not illustrated).

The flow rate of the flow gas supplied to the electrolyte flow battery 1 is preferably 1.0 L/min or more and 50 L/min or less. A flow rate of the flow gas of 1.0 L/min or more results in sufficient purging of the gas phases in the tanks 106 and 107, i.e., sufficient purging of the gas phases in the electrolyte flow battery 1. A flow rate of the flow gas of 50 L/min or less results in inhibition of an increase in pressure in each of the tanks 106 and 107 to an excessive positive pressure (higher pressure than the atmospheric pressure). In this embodiment, as described above, both tanks 106 and 107 are collectively handled. After the flow gas is allowed to flow to the positive electrolyte tank 106, a portion thereof is introduced into the negative electrolyte tank 107. Thus, the flow rate of the flow gas supplied to the electrolyte flow battery 1 is controlled in such a manner that the flow rate of the flow gas supplied to the gas phase in the negative electrolyte tank 107 is 1.0 L/min or more and 50 L/min or less. The flow rate of the flow gas is more preferably 1.0 L/min or more and 49 L/min or less, particularly preferably 1.0 L/min or more and 48 L/min or less.

To monitor whether or not the gas phases in the electrolyte tanks 106 and 107 are sufficiently purged, flowmeters (not illustrated) that measure the flow rate are preferably disposed at various positions of the flow gas channel 4. For example, an additional flowmeter may be disposed on the negative electrode introduction pipe 42, and the degree of opening of the valve 52 may be adjusted in consideration of the measurement results. As a matter of course, if correlation data in which, for example, when a value (L/min) measured with the flowmeter 51 is in a specific range, the gas phases in the tanks 106 and 107 are sufficiently purged is obtained by simulation or experiments with an actual system, the flowmeter 51 may be disposed only at the position of the gas-flow control mechanism 5 in Figure 2.

### • Others

The gas supply mechanism 2 may also include, for example, a backflow prevention mechanism and breathing bags (none of them are illustrated).

### •• Backflow Prevention Mechanism

The backflow prevention mechanism is disposed in the negative electrode discharge pipe 43 and prevents backflow of a gas to the negative electrolyte tank 107. In the case where a positive electrode discharge pipe is provided separately from the gas-phase-communicating pipe 42 as described above, a backflow prevention mechanism is also disposed in the positive electrode discharge pipe. As the backflow prevention mechanism, for example, a well-known water seal valve or a configuration including a flowmeter and a valve can be used. In the case of using a flowmeter and a valve, backflow of the gas to the negative electrolyte tank 107 can be prevented by measuring the flow rate in the negative electrode discharge pipe 43 with the flowmeter and closing the valve on the basis of the measurement results.

### •• Breathing Bag

The breathing bags are suspended in the respective tanks 106 and 107. The insides of the breathing bags communicate with the atmosphere to inhibit a decrease in pressure in the tanks 106 and 107 to a negative pressure (pressure lower than atmospheric pressure). Specifically, when the internal pressure of each of the tanks 106 and 107 is a negative pressure, the breathing bags suck air to reduce the internal volume of each of the tanks 106 and 107 (excluding the breathing bags), thereby increasing the internal pressure of each of the tanks 106 and 107. The breathing bags also function when the internal pressure of each of the tanks 106 and 107 is a positive pressure. Specifically, the gas in the breathing bags is released to the atmosphere to increase the internal volume of each of the tanks 106 and 107 (excluding the breathing bags), thereby reducing the internal pressure of each of the tanks 106 and 107. As the breathing bags, known breathing bags can be used (for example, see Japanese Unexamined Patent Application Publication No. 2002-175825).

### (Electrolyte)

An electrolyte according to an embodiment is an ion solution containing ions serving as an active material, which is common to the conventional electrolyte. One of the characteristics of the electrolyte according to the embodiment is that although the electrolyte can contain, as impurity ions, specific impurity element ions associated with gas generation due to, for example, the side reaction accompanying the battery reactions, the impurity element ion content is very low. This specific impurity element ion will first be described.

### • Impurity Element Ion

### •• First Embodiment

When an electrolyte according to a first embodiment contains, as impurity element ions associated with gas generation, ions of the elements in groups 1 to 8 and 13 to 16 in the fifth period and groups 1, 2, 4 to 8, and 13 to 15 in the sixth period of the periodic table, the total concentration thereof is 2,500 mg/L or less. When the impurity element ion content (total concentration) is in the above range, it is possible to reduce the generation of a gas due to, for example, a side reaction accompanying the battery reactions, in particular, the generation of the H-containing gas, which contains hydrogen, at the negative electrode. Thus, when the flow rate of the flow gas always continuously supplied to the gas phases in the tanks 106 and 107 with the gas supply mechanism 2 is in the range of 1.0 L/min or more and 50 L/min or less described above, the gas phases in the tanks 106 and 107 can be sufficiently purged. Thereby, the concentration of hydrogen in the gas phase in the negative electrolyte tank 107 is reduced, and low-concentration hydrogen can be released from the negative electrolyte tank 107 to the atmosphere.

The elements in groups 1 to 8 in the fifth period of the periodic table are rubidium (Rb, group 1), strontium (Sr, group 2), yttrium (Y, group 3), zirconium (Zr, group 4), niobium (Nb, group 5), molybdenum (Mo, group 6), technetium (Tc, group 7), and ruthenium (Ru, group 8).

The elements in groups 13 to 16 in the fifth period of the periodic table are indium (In, group 13), tin (Sn, group 14), antimony (Sb, group 15), and tellurium (Te, group 16).

The elements in groups 1, 2, and 4 to 8 in the sixth period of the periodic table are cesium (Cs, group 1), barium (Ba, group 2), hafnium (Hf, group 4), tantalum (Ta, group 5), tungsten (W, group 6), rhenium (Re, group 7), and osmium (Os, group 8).

The elements in groups 13 to 15 in the sixth period of the periodic table are thallium (Tl, group 13), lead (Pb, group 14), and bismuth (Bi, group 15).

Hereinafter, these elements are also referred to collectively as a "gas-generating impurity element group".

A lower total concentration is more preferred because gas generation can be further reduced. The total concentration is preferably 2,450 mg/L or less, more preferably 2,400 mg/L or less, particularly preferably 2,300 mg/L or less. The total concentration is preferably 610 mg/L or less, 600 mg/L or less, more preferably 550 mg/L or less, 500 mg/L or less, particularly preferably 0 (zero). The above upper limit is defined as an allowable amount sufficient to purge the gas phase in the negative electrolyte tank 107 by continuously supplying the flow gas. It may be preferred that the total concentration at least in the unused electrolyte be in the above range.

As described above, a lower total concentration results in a further reduction of gas generation. That is, a higher total concentration is more likely to lead to gas generation. Thus, the effect of purging the gas phases is easily provided by continuously supplying the flow gas to the gas phases in the tanks 106 and 107. For example, when the total concentration is more than 610 mg/L, the effect of purging the gas phases is easily provided by continuously supplying the flow gas. Furhermore, when the total concentration is 650 mg/L or more, in particular, 700 mg/L or more, the effect of purging the gas phases is easily provided.

The inventors have found that even in the case where the total concentration of ions of elements in the gas-generating impurity element group is low, an excessive content of ions of a specific element in the gas-generating impurity element group easily results in gas generation. Thus, in the gas-generating impurity element group, the contents of the specific element ions are defined as described below.

### •• Second Embodiment

In an electrolyte according to a second embodiment, if barium ions are contained as impurity element ions associated with gas generation, the concentration of the barium ions is 70 mg/L or less. Among impurity ions that can be contained in the electrolyte, in particular, when the barium ion content is in the above range, gas generation, in particular, the generation of the H-containing gas at the negative electrode, can be reduced. Thus, when the flow rate of the flow gas continuously supplied to the gas phases in the tanks 106 and 107 with the gas supply mechanism 2 is in the above range, the gas phases in the tanks 106 and 107 can be sufficiently purged. Thereby, the concentration of hydrogen in the gas phase in the negative electrolyte tank 107 is reduced, and low-concentration hydrogen can be released from the negative electrolyte tank 107 to the atmosphere.

A lower concentration of barium ions is more preferred because gas generation can be further reduced. The concentration of barium ions is preferably 67 mg/L or less, more preferably 65 mg/L or less, particularly preferably 60 mg/L or less. The concentration of barium ions is preferably 20 mg/L or less, 18 mg/L or less, more preferably 16 mg/L or less, 10 mg/L or less, particularly preferably 0 (zero). The above upper limit is defined as an allowable amount sufficient to purge the gas phase in the negative electrolyte tank 107 by continuously supplying the flow gas. It may be preferred that the concentration of barium ions at least in the unused electrolyte be in the above range.

As described above, a lower concentration of barium ions results in a further reduction of gas generation. That is, a higher concentration of barium ions is more likely to lead to gas generation. Thus, the effect of purging the gas phases is easily provided by continuously supplying the flow gas to the gas phases in the tanks 106 and 107. For example, when the concentration of barium ions is 30 mg/L or more, the effect of purging the gas phases is easily provided by continuously supplying the flow gas. Furhermore, when the concentration of barium ions is 35 mg/L or more, particularly 40 mg/L or more, the effect of purging the gas phases is easily provided.

### •• Third Embodiment

In an electrolyte according to a third embodiment, if molybdenum ions are contained as impurity element ions associated with gas generation, the concentration of molybdenum ions is 2,100 mg/L or less. Among impurity ions that can be contained in the electrolyte, in particular, when the molybdenum ion content is in the above range, gas generation, in particular, the generation of the H-containing gas at the negative electrode, can be reduced. Thus, when the flow rate of the flow gas continuously supplied to the gas phases in the tanks 106 and 107 with the gas supply mechanism 2 is in the above range, the gas phases in the tanks 106 and 107 can be sufficiently purged. Thereby, the concentration of hydrogen in the gas phase in the negative electrolyte tank 107 is reduced, and low-concentration hydrogen can be released from the negative electrolyte tank 107 to the atmosphere.

A lower concentration of molybdenum ions is more preferred because gas generation can be further reduced. The concentration of molybdenum ions is preferably 2,055 mg/L or less, more preferably 2,030 mg/L or less, particularly preferably 2,015 mg/L or less. The concentration of molybdenum ions is preferably 510 mg/L or less, 500 mg/L or less, more preferably 495 mg/L or less, 450 mg/L or less, 400 mg/L, particularly preferably 0 (zero). The above upper limit is defined as an allowable amount sufficient to purge the gas phase in the negative electrolyte tank 107 by continuously supplying the flow gas. It may be preferred that the concentration of molybdenum ions at least in the unused electrolyte be within the range described above.

As described above, a lower concentration of molybdenum ions results in a further reduction of gas generation. That is, a higher concentration of molybdenum ions is more likely to lead to gas generation. Thus, the effect of purging the gas phases is easily provided by continuously supplying the flow gas to the gas phases in the tanks 106 and 107. For example, when the concentration of molybdenum ions is more than 510 mg/L, the effect of purging the gas phases is easily provided by continuously supplying the flow gas. Furhermore, when the concentration of molybdenum ions is 550 mg/L or more, particularly 600 mg/L or more, the effect of purging the gas phases is easily provided.

### •• Fourth Embodiment

In an electrolyte according to a fourth embodiment, if tungsten ions are contained as impurity element ions associated with gas generation, the concentration of the tungsten ions is 310 mg/L or less. Among impurity ions that can be contained in the electrolyte, in particular, when the tungsten ion content is in the above range, gas generation, in particular, the generation of the H-containing gas at the negative electrode, can be reduced. Thus, when the flow rate of the flow gas continuously supplied to the gas phases in the tanks 106 and 107 with the gas supply mechanism 2 is in the above range, the gas phases in the tanks 106 and 107 can be sufficiently purged. Thereby, the concentration of hydrogen in the gas phase in the negative electrolyte tank 107 is reduced, and low-concentration hydrogen can be released from the negative electrolyte 107 to the atmosphere.

A lower concentration of tungsten ions is more preferred because gas generation can be further reduced. The concentration of tungsten ions is preferably 300 mg/L or less, more preferably 285 mg/L or less, particularly preferably 275 mg/L or less. The concentration of tungsten ions is preferably 30 mg/L or less, 29 mg/L or less, more preferably 26 mg/L or less, 20 mg/L, particularly preferably 0 (zero). The above upper limit is defined as an allowable amount sufficient to purge the gas phase in the negative electrolyte tank 107 by continuously supplying the flow gas. It may be preferred that the concentration of tungsten ions at least in the unused electrolyte be within the range described above.

As described above, a lower concentration of tungsten ions results in a further reduction of gas generation. That is, a higher concentration of tungsten ions is more likely to lead to gas generation. Thus, the effect of purging the gas phases is easily provided by continuously supplying the flow gas to the gas phases in the tanks 106 and 107. For example, when the concentration of tungsten ions is 60 mg/L or more, the effect of purging the gas phases is easily provided by continuously supplying the flow gas. Furhermore, when the concentration of tungsten ions is 65 mg/L or more, particularly 70 mg/L or more, the effect of purging the gas phases is easily provided.

### •• Fifth Embodiment

In an electrolyte according to a fifth embodiment, if rhenium ions are contained as impurity element ions associated with gas generation, the concentration of the rhenium ions is 50 mg/L or less. Among impurity ions that can be contained in the electrolyte, in particular, when the rhenium ion content is in the above range, gas generation, in particular, the generation of the H-containing gas at the negative electrode, can be reduced. Thus, when the flow rate of the flow gas continuously supplied to the gas phases in the tanks 106 and 107 with the gas supply mechanism 2 is in the above range, the gas phases in the tanks 106 and 107 can be sufficiently purged. Thereby, the concentration of hydrogen in the gas phase in the negative electrolyte tank 107 is reduced, and low-concentration hydrogen can be released from the negative electrolyte 107 to the atmosphere.

A lower concentration of rhenium ions is more preferred because gas generation can be further reduced. The concentration of rhenium ions is preferably 45 mg/L or less, more preferably 40 mg/L or less, particularly preferably 35 mg/L. The concentration of rhenium ions is preferably 5 mg/L or less, 4.8 mg/L or less, more preferably 4.6 mg/L or less, 4 mg/L, particularly preferably 0 (zero). The above upper limit is defined as an allowable amount sufficient to purge the gas phase in the negative electrolyte tank 107 by continuously supplying the flow gas. It may be preferred that the concentration of rhenium ions at least in the unused electrolyte be within the range described above.

As described above, a lower concentration of rhenium ions results in a further reduction of gas generation. That is, a higher concentration of rhenium ions is more likely to lead to gas generation. Thus, the effect of purging the gas phases is easily provided by continuously supplying the flow gas to the gas phases in the tanks 106 and 107. For example, when the concentration of rhenium ions is more than 5 mg/L, the effect of purging the gas phases is easily provided by continuously supplying the flow gas. Furhermore, when the concentration of rhenium ions is 10 mg/L or more, particularly 15 mg/L or more, the effect of purging the gas phases is easily provided.

### •• Sixth Embodiment

In an electrolyte according to a sixth embodiment, if indium ions are contained as impurity element ions associated with gas generation, the concentration of the indium ions is 25 mg/L or less. Among impurity ions that can be contained in the electrolyte, in particular, when the indium ion content is in the above range, gas generation, in particular, the generation of the H-containing gas at the negative electrode, can be reduced. Thus, when the flow rate of the flow gas continuously supplied to the gas phases in the tanks 106 and 107 with the gas supply mechanism 2 is in the above range, the gas phases in the tanks 106 and 107 can be sufficiently purged. Thereby, the concentration of hydrogen in the gas phase in the negative electrolyte tank 107 is reduced, and low-concentration hydrogen can be released from the negative electrolyte tank 107 to the atmosphere.

A lower concentration of indium ions is more preferred because gas generation can be further reduced. The concentration of indium ions is preferably 23 mg/L or less, more preferably 20 mg/L or less, particularly preferably 18 mg/L. The concentration of indium ions is preferably 5 mg/L or less, 4.8 mg/L or less, more preferably 4.6 mg/L or less, 4 mg/L, particularly preferably 0 (zero). The above upper limit is defined as an allowable amount sufficient to purge the gas phase in the negative electrolyte tank 107 by continuously supplying the flow gas. It may be preferred that the concentration of indium ions at least in the unused electrolyte be within the range described above.

As described above, a lower concentration of indium ions results in a further reduction of gas generation. That is, a higher concentration of indium ions is more likely to lead to gas generation. Thus, the effect of purging the gas phases is easily provided by continuously supplying the flow gas to the gas phases in the tanks 106 and 107. For example, when the concentration of indium ions is more than 5 mg/L, the effect of purging the gas phases is easily provided by continuously supplying the flow gas. Furhermore, when the concentration of indium ions is 7 mg/L or more, particularly 9 mg/L or more, the effect of purging the gas phases is easily provided.

### •• Seventh Embodiment

In an electrolyte according to a seventh embodiment, if antimony ions are contained as impurity element ions associated with gas generation, the concentration of the antimony ions is 50 mg/L or less. Among impurity ions that can be contained in the electrolyte, in particular, when the antimony ion content is in the above range, gas generation, in particular, the generation of the H-containing gas at the negative electrode, can be reduced. Thus, when the flow rate of the flow gas continuously supplied to the gas phases in the tanks 106 and 107 with the gas supply mechanism 2 is in the above range, the gas phases in the tanks 106 and 107 can be sufficiently purged. Thereby, the concentration of hydrogen in the gas phase in the negative electrolyte tank 107 is reduced, and low-concentration hydrogen can be released from the negative electrod electrolyte e tank 107 to the atmosphere.

A lower concentration of antimony ions is more preferred because gas generation can be further reduced. The concentration of antimony ions is preferably 46 mg/L or less, more preferably 43 mg/L or less, particularly preferably 40 mg/L. The concentration of antimony ions is preferably 10 mg/L or less, 9 mg/L or less, more preferably 8 mg/L or less, 6 mg/L, particularly preferably 0 (zero). The above upper limit is defined as an allowable amount sufficient to purge the gas phase in the negative electrolyte tank 107 by continuously supplying the flow gas. It may be preferred that the concentration of antimony ions at least in the unused electrolyte be within the range described above.

As described above, a lower concentration of antimony ions results in a further reduction of gas generation. That is, a higher concentration of antimony ions is more likely to lead to gas generation. Thus, the effect of purging the gas phases is easily provided by continuously supplying the flow gas to the gas phases in the tanks 106 and 107. For example, when the concentration of antimony ions is more than 10 mg/L, the effect of purging the gas phases is easily provided by continuously supplying the flow gas. Furhermore, when the concentration of antimony ions is 12 mg/L or more, particularly 15 mg/L or more, the effect of purging the gas phases is easily provided.

### •• Eighth Embodiment

In an electrolyte according to an eighth embodiment, if bismuth ions are contained as impurity element ions associated with gas generation, the concentration of the bismuth ions is 110 mg/L or less. Among impurity ions that can be contained in the electrolyte, in particular, when the bismuth ion content is in the above range, gas generation, in particular, the generation of the H-containing gas at the negative electrode, can be reduced. Thus, when the flow rate of the flow gas continuously supplied to the gas phases in the tanks 106 and 107 with the gas supply mechanism 2 is in the above range, the gas phases in the tanks 106 and 107 can be sufficiently purged. Thereby, the concentration of hydrogen in the gas phase in the negative electrolyte tank 107 is reduced, and low-concentration hydrogen can be released from the negative electrolyte tank 107 to the atmosphere.

A lower concentration of bismuth ions is more preferred because gas generation can be further reduced. The concentration of bismuth ions is preferably 100 mg/L or less, more preferably 95 mg/L or less, particularly preferably 90 mg/L. The concentration of bismuth ions is preferably 20 mg/L or less, 19 mg/L or less, more preferably 16 mg/L or less, 15 mg/L, particularly preferably 0 (zero). The above upper limit is defined as an allowable amount sufficient to purge the gas phase in the negative electrolyte tank 107 by continuously supplying the flow gas. It may be preferred that the concentration of bismuth ions at least in the unused electrolyte be within the range described above.

As described above, a lower concentration of bismuth ions results in a further reduction of gas generation. That is, a higher concentration of bismuth ions is more likely to lead to gas generation. Thus, the effect of purging the gas phases is easily provided by continuously supplying the flow gas to the gas phases in the tanks 106 and 107. For example, when the concentration of bismuth ions is more than 20 mg/L, the effect of purging the gas phases is easily provided by continuously supplying the flow gas. Furhermore, when the concentration of bismuth ions is 25 mg/L or more, particularly 30 mg/L or more, the effect of purging the gas phases is easily provided.

### •• Ninth Embodiment

An electrolyte according to a ninth embodiment satisfies all the requirements described in the first to eighth embodiments. The use of the electrolyte according to the ninth embodiment can reduce the generation of a gas, in particular, the generation of the H-containing gas at the negative electrode. Thus, when the flow rate of the flow gas continuously supplied to the gas phases in the tanks 106 and 107 with the gas supply mechanism 2 is in the above range, the gas phases in the tanks 106 and 107 can be sufficiently purged. Thereby, the concentration of hydrogen in the gas phase in the negative electrolyte tank 107 is reduced, and low-concentration hydrogen can be released from the negative electrolyte tank 107 to the atmosphere.

### • Method for Reducing Impurity Element Ion

To reduce the concentrations of ions of the elements in the gas-generating impurity element group that can be present in the electrolyte, for example, the following measures can be used.
(1) A raw material (for example, an active material or a solvent) having a low content of an element in the gas-generating impurity element group, preferably having no element in the gas-generating impurity element group, is used in the manufacturing process of the electrolyte.
(2) A member having a low content of an element in the gas-generating impurity element group, preferably having no element in the gas-generating impurity element group, is used in the manufacturing process of the electrolyte.
(3) A member having a low content of an element in the gas-generating impurity element group, preferably having no element in the gas-generating impurity element group, is used as a member (for example, a transport tank or storage tank) used in, for example, the transport or storage of the electrolyte.
(4) The electrolyte is subjected to a removal operation to remove the ions of elements in the gas-generating impurity element group.
(5) A member having a low content of an element in the gas-generating impurity element group, preferably having no element in the gas-generating impurity element group, is used as a member that can come into contact with the electrolyte among members included in the electrolyte flow battery system S.

The removal operation described in (4) can be performed by any of various methods capable of removing element ions, for example, coagulating sedimentation, solvent extraction, filtration using an ion-exchange resin or a chelate resin, electrolytic deposition, and membrane separation. A known method may be used. In the filtration using a chelate resin, in particular, specific element ions can be selectively filtered by, for example, adjusting physical properties of the chelate resin and the pH of the electrolyte. This filtration can be performed by passing an electrolyte through a filter composed of the chelate resin or a column packed with the chelate resin in the form of beads. By performing the removal operation, different types of ions of elements in the gas-generating impurity element group present in an electrolyte are simultaneously removed, in some cases.

The removal operation can be performed at any time. Specifically, the removal operation can be performed before the operation in which the electrolyte is supplied to the electrolyte flow battery system S. Furthermore, after the electrolyte is analyzed for components during, for example, the standby period or the stop period of the system S being in operation, the removal operation can be performed on the basis of the results. In this way, the concentration of ions of the elements in the gas-generating impurity element group can be maintained within a specific range during the operation of the system S as well as before the operation. Even if the system S is operated over a long period of time, a gas is not easily generated. Thus, when the flow rate of the flow gas always continuously supplied is in the above range, the gas phases in the tanks 106 and 107 can be sufficiently purged.

### • Active Material

The electrolyte according to the embodiment can contain various active materials. Examples of the electrolyte include a vanadium-based electrolyte (see Figure 1) containing vanadium ions as an active material for both electrodes, an iron-chromium-based electrolyte containing iron ions as a positive electrode active material and chromium ions as a negative electrode active material, a manganese-titanium-based electrolyte (two-separate-electrolyte type) containing manganese ions as a positive electrode active material and titanium ions as a negative electrode active material, and a manganese-titanium-based electrolyte (one-common-electrolyte type) containing manganese ions and titanium ions for both electrodes. In particular, the vanadium-based electrolyte can contain elements in the gas-generating impurity element group in the manufacturing process of the electrolyte. It is thus desired to appropriately perform, for example, the removal operation described in (4).

In the case where the electrolyte according to the embodiment is an vanadium-based electrolyte, the concentration of vanadium ions in each of the positive electrolyte and the negative electrolyte is preferably 1 mol/L or more and 3 mol/L or less, 1.2 mol/L or more and 2.5 mol/L or less, more preferably 1.5 mol/L or more and 1.9 mol/L or less. This effect will be described below.

In the case where the electrolyte according to the embodiment is a vanadium-based electrolyte, vanadium ions preferably have an average valence of 3.3 or more and 3.7 or less, more preferably 3.4 or more and 3.6 or less. In this case, a good balance of valences in both electrodes is provided, battery reactions can be satisfactorily performed, and good battery characteristics, such as battery efficiency and energy density, can be provided. The good balance of valences easily reduces the occurrence of a side reaction accompanying the battery reactions, thus easily reducing gas generation due to the side reaction.

### • Solvent and Others

The electrolyte according to the embodiment may be an acid solution containing the active material, and in particular, may be an aqueous solution of an acid. For example, the acid solution contains at least one acid or acid salt selected from sulfuric acid (H₂SO₄), K₂SO₄, Na₂SO₄, phosphoric acid (H₃PO₄), H₄P₂O₇, K₂HPO₄, Na₃PO₄, K₃PO₄, nitric acid (HNO₃), KNO₃, hydrochloric acid (HCl), and NaNO₃. The electrolyte may be an organic acid solution.

In the case where the electrolyte according the embodiment is a vanadium-based electrolyte composed of a sulfuric acid solution containing phosphoric acid, the electrolyte preferably has a concentration of vanadium ions within the foregoing specific range, a concentration of free sulfuric acid of 1 mol/L or more and 4 mol/L or less, a concentration of phosphoric acid of 1.0 × 10⁻⁴ mol/L or more and 7.1 × 10⁻¹ mol/L or less, a concentration of ammonium of 20 mg/L or less, and a concentration of silicon (Si) of 40 mg/L or less.

The use of the concentration of vanadium ions and the concentration of free sulfuric acid within the above ranges can provide the electrolyte having the good balance of valences.

A combination such that the concentration of vanadium ions, the concentration of sulfuric acid, and the concentration of phosphoric acid are within the specific ranges described above impedes the formation of an active material element-containing precipitate such as a vanadium compound. Thus, good battery performance can be provided over a long period of time.

The use of a concentration of ammonium within the specific range described above easily inhibits the precipitation of an ammonium-vanadium compound among vanadium compounds.

The use of silicon within the specific range described above can reduce the occurrence of a phenomenon that can adversely affect the membrane 11.

In this embodiment, the effect of inhibiting the generation of a gas originating from impurity element ions can be provided. Furthermore, the formation of precipitates originating from active material element ions can be reduced. Accordingly, the battery reactions can be satisfactorily performed.

The concentration of free sulfuric acid is more preferably 1.5 mol/L or more and 3.5 mol/L or less. The concentration of phosphoric acid is more preferably 1.0 × 10⁻³ mol/L or more and 3.5 × 10⁻¹ mol/L or less. The concentration of ammonium is more preferably 10 mg/L or less. The concentration of silicon is more preferably 30 mg/L or less. To reduce the concentrations of ammonium and silicon, a known method such as filtration using a filter (for example, see Patent Literature 1) can be employed.

### (Application)

The electrolyte flow battery system S according to the embodiments can be used as a storage battery for the purposes of, for example, stabilizing fluctuation of power generation output, storing generated power during oversupply, and leveling load with respect to natural energy power generation such as solar photovoltaic power generation or wind power generation. Furthermore, the electrolyte flow battery system S according to embodiments can be combined with a general power plant and used as a storage battery for the purposes of preventing momentary voltage drop and power failure and levelling load. The electrolytes according to any of the first to ninth embodiments can be used for the electrolyte flow battery system S described above.

### [Test Example 1]

A charge and discharge test was performed while various electrolytes were each circulated and supplied to an electrolyte flow battery, to examine the state of gas generation when no flow gas was supplied to a gas phase in each tank and the state of a gas discharged from the gas phase in the tank when the flow gas was always continuously supplied.

In this test, an electrolyte flow battery system was fabricated, the system including an electrolyte flow battery having a cell stack in which battery cells are stacked, a circulation mechanism that circulates and supplies an electrolyte to the electrolyte flow battery (cell stack), and a gas supply mechanism that can always continuously supply the flow gas to the gas phases in both electrolyte tanks (see Figures 1 and 2).

Each of the battery cells of the cell stack included electrodes each having an electrode area of 500 cm² and composed of carbon felt, a membrane, and a frame assembly.

This electrolyte flow battery system had a capacity of 1 kW for 5 hours.

Aqueous sulfuric acid solutions each containing vanadium ions serving as an active material for both electrodes, i.e., vanadium-based electrolytes, were provided as the electrolytes for samples. Regarding the amount of the electrolyte of each sample, a 175-L positive electrolyte and a 175-L negative electrolyte were used (350 L in total of the positive and negative electrolytes). The electrolytes of the samples had common components described below.

### Concentration in Electrolyte (Common to Samples)

- Concentration of vanadium ions: 1.7 mol/L
- Average valence of vanadium ions: 3.5
- Concentration of free sulfuric acid: 2.0 mol/L
- Concentration of phosphoric acid: 0.14 mol/L (1.4 × 10⁻¹ mol/L)
- Concentration of ammonium: 20 mg/L or less
- Concentration of silicon: 40 mg/L or less

The concentrations of impurity element ions in the electrolytes of sample Nos. 1-1 to 1-13 presented in Table 1 were adjusted by passing the electrolytes through a column packed with a chelate resin. Then the electrolytes were subjected to concentration measurement described below.

The concentrations of impurity element ions in the electrolytes of sample Nos. 1-101 to 1-108 presented in Table 2 were adjusted by passing the electrolytes through a column packed with a different chelate resin from that used for sample No. 1-1, by another method for removing ions, or by the addition of specific impurity element ions. Then the electrolytes were subjected to concentration measurement described below.

Before the charge and discharge test, the electrolytes of the samples were subjected to component analysis to measure the concentrations (mg/L) of ions of the elements in groups 1 to 8 and 13 to 16 in the fifth period and groups 1, 2, 4 to 8, and 13 to 15 in the sixth period of the periodic table. Tables 1 and 2 present the results. The concentrations were measured with an ICP mass spectrometer (Agilent 7700x ICP-MS, available from Agilent Technologies Inc).

Charge and discharge test was performed under conditions described below while the electrolyte of each sample was circulated and supplied to the electrolyte flow battery. The state of gas generation was examined by collecting a gas generated at the negative electrode during charge and discharge in a state in which no flow gas was supplied to the gas phase in each tank and subjecting the gas to component analysis to determine the generation rate of hydrogen (cc/h/m²). Next, the state of gas discharge was examined by collecting a gas discharged from the negative electrolyte tank during charge and discharge in a state in which the flow gas was always continuously supplied to the gas phases in the tanks and subjecting the gas to component analysis to determine the discharge rate of hydrogen (cc/h/m²). Nitrogen gas was used as the flow gas. The flow rate (L/min) of the flow gas for each sample was set as described in Table 1. Values of the generation rate of hydrogen (cc/h/m²) and the discharge rate of hydrogen (cc/h/m²) are listed in Tables 1 and 2.

### (Charge and Discharge Conditions)

Charge and discharge method: continuous charge and discharge at a constant current
Current density: 70 (mA/cm²)
End-of-charge voltage: 1.55 (V)/cell
End-of-discharge voltage: 1.00 (V)/cell
Temperature: room temperature (25°C)

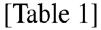

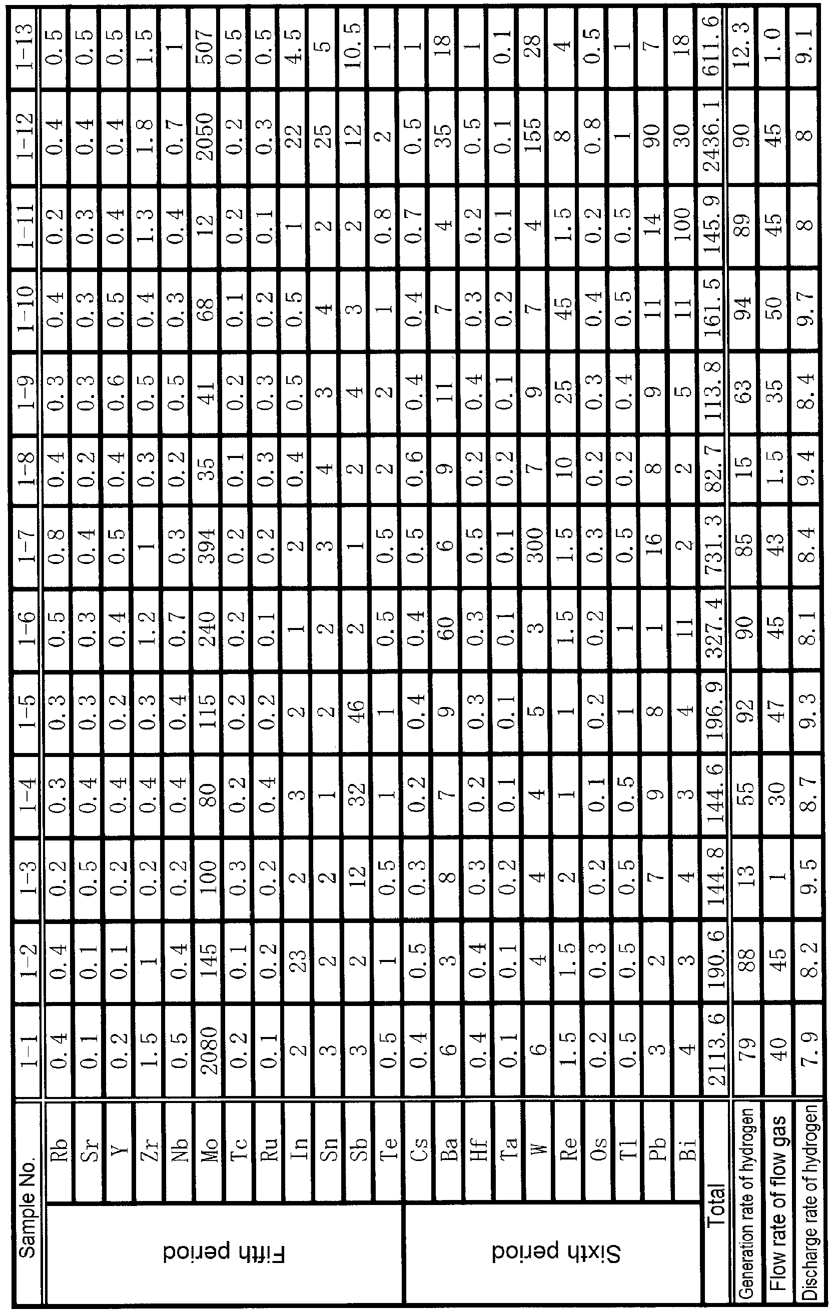

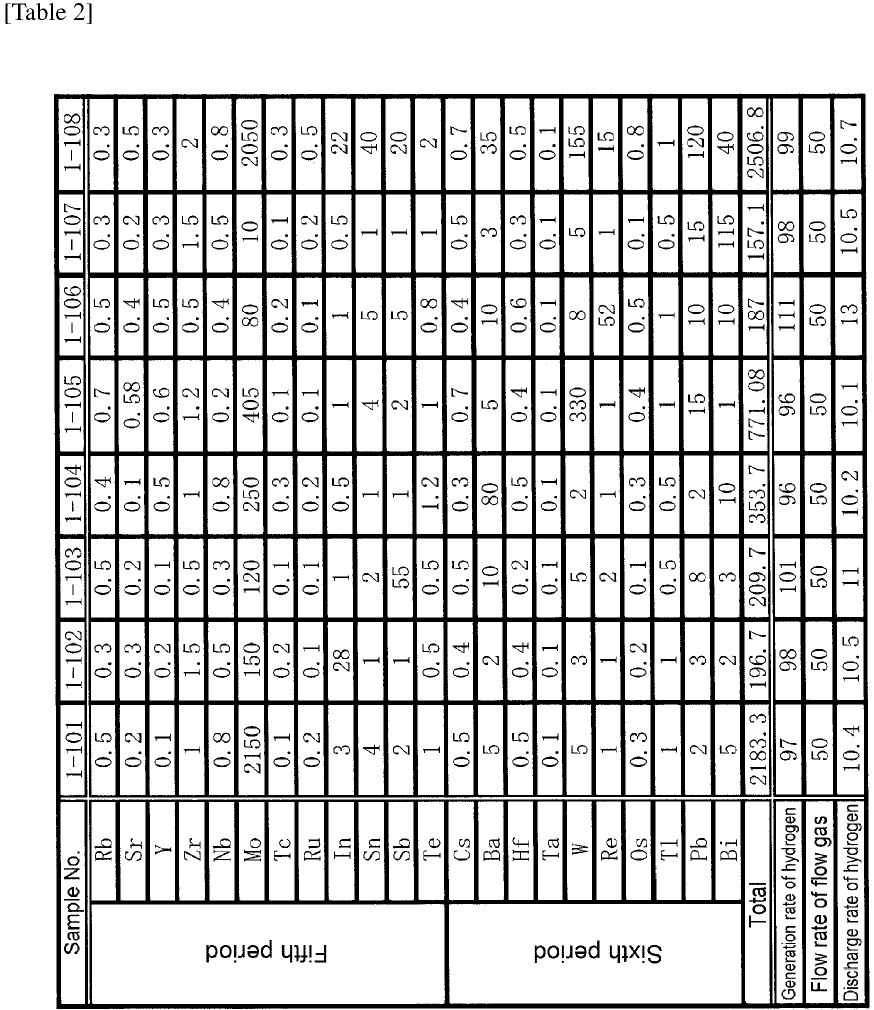

Table 1 indicates that when the impurity element ions that can be contained in the electrolyte satisfy at least one of (1) to (8) described below, gas generation can be reduced during repeated charge and discharge operations in a state in which no flow gas is supplied to the gas phase in each tank, specifically, the generation rate of hydrogen at the negative electrode is 95 cc/h/m² or less. The generation rate of hydrogen at the negative electrode is more than 10 cc/h/m² in any sample. When the flow rate of the flow gas always continuously supplied to the tanks is 1.0 L/min or more and 50 L/min or less, the discharge rate of hydrogen discharged from the negative electrolyte tank can be 10 cc/h/m² or less.
(1) The total concentration of ions of the elements in groups 1 to 8 and 13 to 16 in the fifth period and groups 1, 2, 4 to 8, and 13 to 15 in the sixth period of the periodic table is 2,500 mg/L or less.
(2) The concentration of barium ions is 70 mg/L or less.
(3) The concentration of molybdenum ions is 2,100 mg/L or less.
(4) The concentration of tungsten ions is 310 mg/L or less.
(5) The concentration of rhenium ions is 50 mg/L or less.
(6) The concentration of indium ions is 25 mg/L or less.
(7) The concentration of antimony ions is 50 mg/L or less.
(8) The concentration of bismuth ions is 110 mg/L or less.

Table 2 indicates that when one of (1) to (8) is not satisfied, hydrogen is easily generated during repeated charge and discharge operations in a state in which no flow gas is supplied to the gas phase in each tank, specifically, the generation rate of hydrogen at the negative electrode is more than 95 cc/h/m². When such an electrolyte is used, the discharge rate of hydrogen from the negative electrolyte tank is not 10 cc/h/m² or less even if the flow rate of the flow gas always continuously supplied to both tanks is 50 L/min. The discharge rate of hydrogen is more than 10 cc/h/m².

The test indicates that in the case where the element ions defined in (1) to (8) are treated as impurity element ions associated with gas generation due to a side reaction accompanying battery reactions and where the concentrations of the impurity element ions are set to specific ranges, the gas generation can be reduced. In particular, the test indicates that the concentrations of ions of elements in the gas-generating impurity element group are preferably set to specific ranges before the electrolyte flow battery system is operated (unused state). From this point of view, the concentrations will be preferably adjusted in a short period of operation (depending on the capacity of the electrolyte flow battery, for example, about 100 cycles or less for a battery having a capacity of 10 kWh or more) from the start of operation of the electrolyte flow battery system. Because the concentration of ions of at least one element in the gas-generating impurity element group in each electrolyte can be changed during or after charge and discharge of the electrolyte flow battery system, the foregoing removal operation or the like is preferably performed at an appropriate time. In the case where the electrolyte having concentrations of ions of impurity elements within specific ranges is used and where the flow rate of the flow gas always continuously supplied to the tanks is 1.0 L/min or more and 50 L/min or less, the discharge rate of hydrogen is 10 cc/h/m² or less.

### [Test Example 2]

As with test example 1, a charge and discharge test was performed while various prepared electrolytes were each circulated and supplied to the electrolyte flow battery, to examine the generation rate of hydrogen at the negative electrode when no flow gas was supplied. Table 3 presents the results.

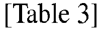

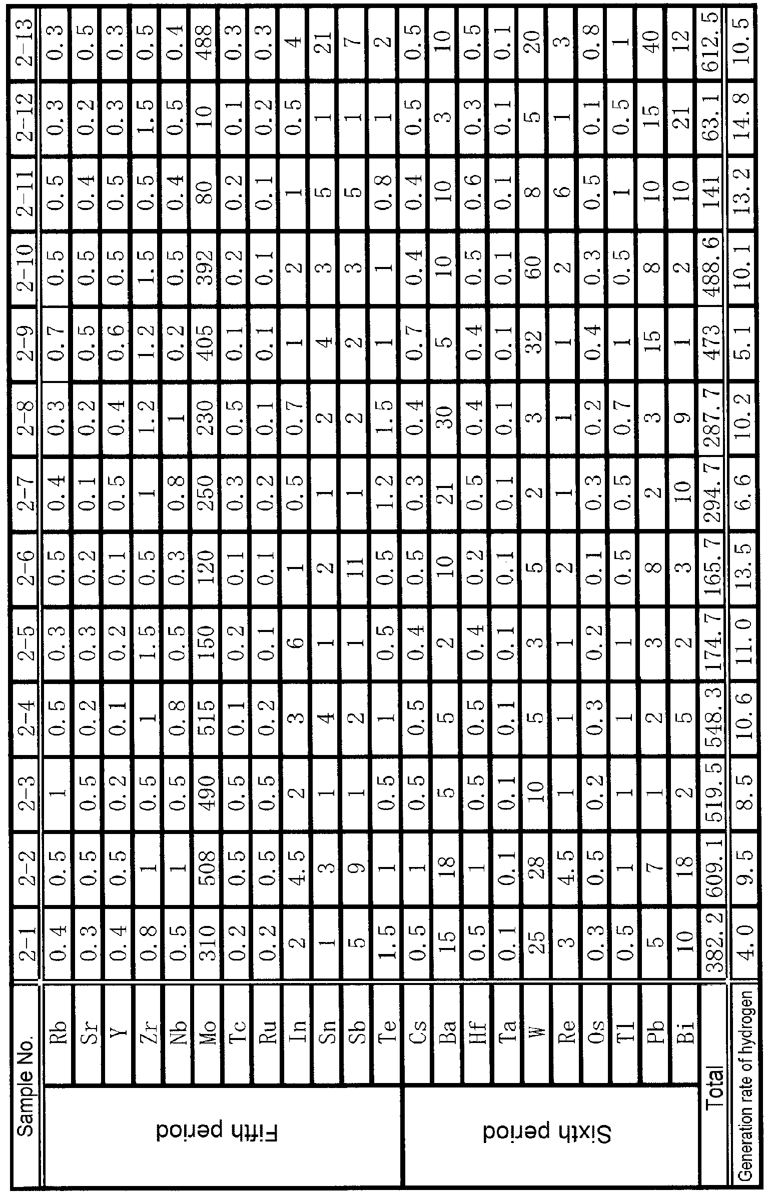

Table 3 indicates that the generation rate of hydrogen of each sample is 95 cc/h/m² or less. The generation rate of hydrogen of each of sample Nos. 2-4 to 2-6, 2-8, and 2-10 to 2-13 is 10 cc/h/m² or more and is comparable to or lower than the generation rates of hydrogen of sample Nos. 1-1 to 1-13 in test example 1. This indicates that as with sample Nos. 1-1 to 1-13, when the flow rate of the flow gas always continuously supplied to the tanks is 1.0 L/min or more and 50 L/min or less in each of sample Nos. 2-4 to 2-6, 2-8, and 2-10 to 2-13, the discharge rate of hydrogen is 10 cc/h/m² or less. The generation rate of hydrogen of each of sample Nos. 2-1 to 2-3, 2-7, and 2-9 is 10 cc/h/m² or less. Thus, when the flow rate of the flow gas always continuously supplied to the tanks is 1.0 L/min or more and 50 L/min or less, the discharge rate of hydrogen thereof can be further reduced.

The present invention is not limited to these examples. The present invention is indicated by the appended claims. It is intended to include any modifications within the scope and meaning equivalent to the scope of the claims. For example, in the test examples described above, the type and concentration of the active material, the type and concentration of the acid in the electrolytes for both electrodes, the amount of the each electrolyte, the size of each electrode, the capacity of the electrolyte flow battery, and so forth can be appropriately changed.

### Reference Signs List

S electrolyte flow battery system, 1 electrolyte flow battery,
100 battery cell, 10c positive electrode, 10a negative electrode, 11 membrane,
106 positive electrolyte tank, 107 negative electrolyte tank, 108 to 111 pipe
112, 113 pump
2 gas supply mechanism
3 gas supply source
4 flow gas channel
41 positive electrode introduction pipe, 42 negative electrode introduction pipe (gas-phase-communicating pipe)
43 negative electrode discharge pipe
5 gas-flow control mechanism
51 flowmeter, 52 valve
200 alternating current/direct current converter, 210 transformer facility, 300 power generation unit,
400 load

## Claims

1. An electrolyte flow battery system including an electrolyte flow battery and an electrolyte supplied to the electrolyte flow battery, comprising:
a gas supply mechanism that always continuously supplies a flow gas containing an inert gas to a gas phase in a tank that stores the electrolyte,
wherein the gas supply mechanism includes:
a gas supply source of the flow gas;
a flow gas channel including an introduction pipe through which the flow gas is introduced into the gas phase in the tank and a discharge pipe through which a gas is discharged from the gas phase in the tank; and
a gas-flow control mechanism that controls a flow rate of the flow gas from the gas supply source,
wherein in the electrolyte,
a total concentration of ions of elements in groups 1 to 8 and 13 to 16 in a fifth period and groups 1, 2, 4 to 8, and 13 to 15 in a sixth period of a periodic table is 2,500 mg/L or less, the ions serving as impurity element ions associated with a generation of a gas containing a hydrogen element,
a concentration of vanadium ions is 1 mol/L or more and 3 mol/L or less,
a concentration of free sulfuric acid is 1 mol/L or more and 4 mol/L or less,
a concentration of phosphoric acid is 1.0 × 10⁻⁴ mol/L or more and 7.1 × 10⁻¹ mol/L or less,
a concentration of ammonium is 20 mg/L or less,
a concentration of silicon is 40 mg/L or less, and
a generation rate of hydrogen generated at a negative electrode of the electrolyte flow battery during charge and discharge is less than 95 cc/h/m² when a charge and discharge test is performed under conditions described below while the electrolyte is circulated and supplied to the electrolyte flow battery without supplying the flow gas, and
wherein a flow rate of the flow gas is 1.0 L/min or more and 50 L/min or less, charge and discharge conditions:
charge and discharge method: continuous charge and discharge at a constant current;
current density: 70 mA/cm²;
end-of-charge voltage: 1.55 V/cell;
end-of-discharge voltage: 1.00 V/cell; and
temperature: room temperature, 25°C.

2. The electrolyte flow battery system according to claim 1, wherein the electrolyte has a concentration of barium ions of 70 mg/L or less, the barium ions serving as impurity element ions associated with a generation of a gas containing a hydrogen element.

3. The electrolyte flow battery system according to claim 1 or 2, wherein the electrolyte has a concentration of molybdenum ions of 2,100 mg/L or less, the molybdenum ions serving as impurity element ions associated with a generation of a gas containing a hydrogen element.

4. The electrolyte flow battery system according to any one of claims 1 to 3, wherein the electrolyte has a concentration of tungsten ions of 310 mg/L or less, the tungsten ions serving as impurity element ions associated with a generation of a gas containing a hydrogen element.

5. The electrolyte flow battery system according to any one of claims 1 to 4, wherein the electrolyte has a concentration of rhenium ions of 50 mg/L or less, the rhenium ions serving as impurity element ions associated with a generation of a gas containing a hydrogen element.

6. The electrolyte flow battery system according to any one of claims 1 to 5, wherein the electrolyte has a concentration of indium ions of 25 mg/L or less, the indium ions serving as impurity element ions associated with a generation of a gas containing a hydrogen element.

7. The electrolyte flow battery system according to any one of claims 1 to 6, wherein the electrolyte has a concentration of antimony ions of 50 mg/L or less, the antimony ions serving as impurity element ions associated with a generation of a gas containing a hydrogen element.

8. The electrolyte flow battery system according to any one of claims 1 to 7, wherein the electrolyte has a concentration of bismuth ions of 110 mg/L or less, the bismuth ions serving as impurity element ions associated with a generation of a gas containing a hydrogen element.

9. An electrolyte supplied to an electrolyte flow battery,
wherein a total concentration of ions of elements in groups 1 to 8 and 13 to 16 in a fifth period and groups 1, 2, 4 to 8, and 13 to 15 in a sixth period of a periodic table is 2,500 mg/L or less, the ions serving as impurity element ions associated with a generation of a gas containing a hydrogen element,
a concentration of vanadium ions is 1 mol/L or more and 3 mol/L or less,
a concentration of free sulfuric acid is 1 mol/L or more and 4 mol/L or less,
a concentration of phosphoric acid is 1.0 × 10⁻⁴ mol/L or more and 7.1 × 10⁻¹ mol/L or less,
a concentration of ammonium is 20 mg/L or less,
a concentration of silicon is 40 mg/L or less, and
a generation rate of hydrogen generated at a negative electrode of the electrolyte flow battery during charge and discharge is less than 95 cc/h/m² when a charge and discharge test is performed under conditions described below while the electrolyte is circulated and supplied to the electrolyte flow battery,
(charge and discharge conditions):
charge and discharge method: continuous charge and discharge at a constant current;
current density: 70 (mA/cm²);
end-of-charge voltage: 1.55 (V)/cell;
end-of-discharge voltage: 1.00 (V)/cell; and
temperature: room temperature (25°C).
